# EUROPÄISCHE PATENTSCHRIFT

(11) **EP 0 982 245 B1**
(45) Veröffentlichungstag und Bekanntmachung des Hinweises auf die Patenterteilung: **03.03.2004**
(21) Anmeldenummer: 99115938.5
(22) Anmeldetag: 13.08.1999
(51) Int. Cl.: B65G 21/06

(54) **Gebindetransporteur**
Conveyor for packages
Transporteur pour emballages

(30) Priorität: 22.08.1998 DE 29815088 U
(43) Veröffentlichungstag der Anmeldung: 01.03.2000
(73) Patentinhaber: KRONES Aktiengesellschaft, D-93068 Neutraubling (DE)
(72) Erfinder: Ternes, Klaus, 93053 Regensburg (DE)

(56) Entgegenhaltungen:
- EP-A- 0 120 996
- EP-A- 0 121 920
- EP-A- 0 360 081
- DE-U- 9 300 855
- DE-U- 29 815 088

## Beschreibung

Die Erfindung betrifft einen Gebindetransporteur mit einem gegenüberliegende Wangen aufweisenden Traggestell und einer auf diesem geführten endlosen Scharnierbandkette mit einem Ober- und Untertrum.

Üblicherweise ist im vorderen Endbereich - bezogen auf die Förderrichtung - des Traggestells eine Antriebswelle gelagert, die über ein Kettenrad das Obertrum der Scharnierbandkette antreibt, während am rückwärtigen Ende eine Achse mit einem frei drehbaren Umlenkrad zur Überführung der Kette aus dem Untertrum in das Obertrum vorhanden ist. Derartige Gebindetransporteure werden in Getränkeabfüllanlagen oder der Verpackungsindustrie zum Transportieren von Flaschenkästen, Kartons, Trays oder dgl. Stückgüter verwendet. In Abhängigkeit der zu transportierenden Gebinde werden verschiedene Scharnierbandkettentypen eingesetzt, die sich in Material und Scharniergelenkgeometrie unterscheiden. So werden beispielsweise für Mehrweggebinde (Flaschenkästen usw.) Metallketten, für Einweggebinde (Kartons usw.) Kunststoffketten und für besonders empfindliche Gebinde, wie z.B. mit Schrumpffolie umhüllte Trays, sog. Röllchenketten verwendet. Ferner gibt es die genannten Kettentypen jeweils in geradelaufender oder kurvengängiger Ausführung. Aufgrund der unterschiedlichen Scharniergelenkformen und -abmessungen müssen jeweils auf den verwendeten Kettentyp abgestimmte Antriebs- und Umlenkräder verwendet werden, die unterschiedliche Befestigungspositionen der Antriebswelle und/oder Achse im Traggestell erfordern. Daraus resultiert eine entsprechende Teilevielfalt für den Transporteurhersteller. Ein weiterer Nachteil besteht darin, dass im Falle einer Gebindeumstellung beim Benutzer solcher Gebindetransporteure ein beträchtlicher Umbauaufwand von Nöten ist, um beispielsweise bei einem Wechsel von Flaschenkästen auf folienverpackte Trays eine Metallkette gegen eine Röllchenkette auszutauschen.

Aus EP 0 121 920 A2 ist ein Transporteur bekannt, bei dem die Antriebs- und Umlenkwalze an mit Langlöchern versehenen Trägern gelagert ist, die in Förderrichtung längsverstellbar an einem eine horizontale Lochreihe aufweisenden Transporteurgestell befestigbar sind. Die Langlöcher ermöglichen ein einfaches Spannen des Förderbandes. Wegen der Langlöcher ist aber nachteiligerweise keine eindeutig wiederholbare Befestigung der Achsen in verschiedenen Positionen ohne eine vorherige zeitaufwändige Feineinstellung in Längsrichtung möglich. In vertikaler Richtung voneinander abweichende Positionen sind bei dieser Konstruktion nicht vorgesehen.

Auch EP 0 360 081 A2 offenbart einen Transporteur mit ausschließlich in Förderrichtung verstellbar gelagerter Achs- bzw. Antriebswellenkonstruktion. In den Seitenteilen des Transporteurgestells sind jeweils zwei Langlöcher für die Befestigungsschrauben der Lagerflansche vorgesehen. Eine Befestigung der Achsen oder Wellen in mehreren eindeutig wiederholbaren Positionen ist nicht gegeben. Eine Verstellung in vertikaler Richtung ist nicht möglich.

Demzufolge liegt der Erfindung die Aufgabe zugrunde, eine Vereinfachung anzugeben.

Gelöst wird die Aufgabe dadurch, dass die Antriebswelle und/oder die Achse in verschiedenen Positionen an den Wangen befestigbar ist und für jede der einzelnen Positionen Befestigungsbohrungen in den Wangen vorhanden sind.

Diese Lösung ermöglicht wegen der Reduzierung der Teilevielfalt eine Standardisierung und Vereinfachung in der Gebindetransporteurherstellung und -montage. Ferner wird der evtl. Umbau eines Gebindetransporteurs auf einen anderen Kettentyp beim Betreiber des Transporteurs erleichtert. Das Versetzen der Antriebswelle und/oder Achse geht ohne langwierige spanabhebende Arbeiten schnell vonstatten, weil die entsprechenden Befestigungsbohrungen in den Wangen mit der notwendigen Genauigkeit bereits vorhanden sind.

Vorteilhafte Weiterbildungen der Erfindung sind in den Unteransprüchen angegeben.

Nachfolgend wird ein bevorzugtes Ausführungsbeispiel anhand der Fig. beschrieben. Es zeigt:
- Fig. 1: eine Draufsicht eines Gebindetransporteurs und
- Fig. 2: einen Längsschnitt entlang der Linie A-A in Fig. 1.

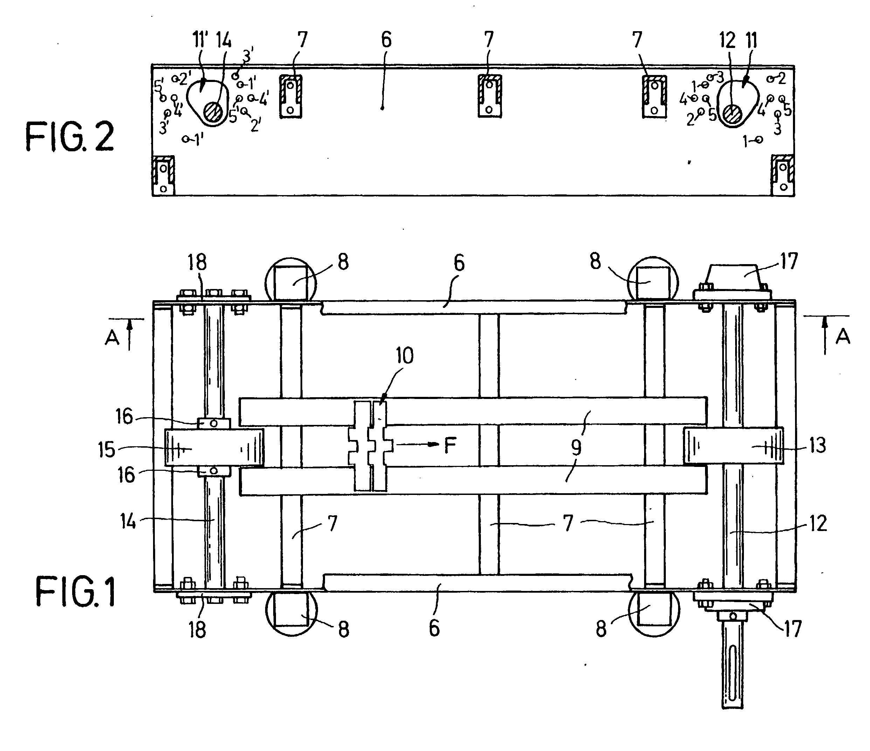

Wie in der Fig. 1 zu erkennen ist, besteht das Traggestell des Gebindetransporteurs im wesentlichen aus zwei mit Abstand parallel angeordneten Wangen 6 aus Blech, die durch mehrere beabstandete Quertraversen 7 zwischen ihren zueinander weisenden Innenseiten verbunden sind und durch an den voneinander wegweisenden Außenseiten der Wangen angeschraubte Standbeine 8 getragen werden. An der Oberseite der Quertraversen 7 sind parallele Gleitleisten 9 befestigt. Auf diesen Gleitleisten liegt die Unterseite des lasttragenden Obertrums der Scharnierbandkette 10 auf, deren Scharniergelenke zwischen den Gleitleisten 9 seitlich geführt sind. Das nicht abgebildete Untertrum der Scharnierbandkette wird entgegen der Förderrichtung F des Obertrums unterhalb der Quertraversen 7 zurückgeführt.

Am vorderen und hinteren Ende der Wangen 6 - in Förderrichtung F gesehen - befindet sich jeweils eine Öffnung 11 bzw. 11' mit mehreren zugeordneten Befestigungsbohrungen 1,1' bis 5,5'. Die Öffnungen 11 am vorderen Ende werden von einer Antriebswelle 12 mit einem mittig darauf befestigten Kettenrad 13 und die Öffnungen 11' am hinteren Ende von einer Achse 14 mit einem darauf mittig zwischen zwei Stellringen 16 frei drehbar gelagerten Umlenkrad 15 durchgriffen. Die Antriebswelle 12 ist in zwei Flanschlagern 17 drehbar gelagert, die jeweils zwei Befestigungsbohrungen besitzen und mit zwei Schrauben an der Außenseite der Wangen 6 anliegend befestigt sind. In den Wangen 6 befinden sich um den Öffnungen 11 herum jeweils zehn Bohrungen 1 bis 5, wobei immer zwei mit gleichen Ziffern bezeichnete Bohrungen zum Anschrauben eines Flanschlagers 17 in einer bestimmten Position zusammengehören, d.h. ein mit den Bohrungen im Flanschlager deckungsgleiches Paar bilden. Dadurch ergeben sich für die Flanschlager 17 fünf verschiedene Befestigungspositionen.

Auch die Achse 14 ist in fünf verschiedenen Positionen an den Wangen 6 befestigbar. An beiden Enden der Achse 14 ist jeweils eine Halteplatte 18 verdrehfest angeschraubt, die zwei weitere Bohrungen zum Anschrauben der Halteplatten an den Außenseiten der Wangen 6 aufweist. Um den von der Achse 14 durchgriffenen Öffnungen 11' herum befinden sich ebenfalls jeweils fünf Bohrungspaare 1' bis 5' in beiden Wangen 6, d.h. zehn Bohrungen pro Öffnung. Somit kann die Achse 14 gleichfalls in fünf verschiedenen Positionen an den Wangen 6 mit Schrauben und Muttern befestigt werden. Die Öffnungen 11,11' sind so geformt, dass in allen fünf Befestigungspositionen ein freier Durchgriff für die Antriebswelle 12 bzw. die Achse 14 besteht.

## Patentansprüche

1. Gebindetransporteur mit einem gegenüberliegende Wangen (6) aufweisenden Traggestell und einer auf diesem geführten endlosen Scharnierbandkette (10) mit einem Ober- und Untertrum, einer am vorderen Ende des Traggestells quer zur Förderrichtung (F) ausgerichteten Antriebswelle (12) mit einem darauf befestigten Kettenantriebsrad (13) und/oder einer am rückwärtigen Ende des Traggestells quer zur Förderrichtung ausgerichteten Achse (14) mit einem darauf drehbar gelagerten Kettenumlenkrad (15), sowie mit Öffnungen (11, 11') in den Wangen (6), wobei die Antriebswelle (12) und/oder die Achse (14) in horizontal und vertikal verschiedenen Positionen an den Wangen (6) befestigbar ist, für jede der einzelnen Positionen Befestigungsbohrungen (1,1' bis 5,5') in den Wangen (6) vorhanden sind und die Öffnungen (11, 11') so ausgestaltet sind, dass sie von der Antriebswelle (12) oder Achse (14) in jeder Position durchgreifbar sind.

2. Transporteur nach Anspruch 1, **dadurch gekennzeichnet, dass** die Antriebswelle (12) an beiden Enden in Flanschlagern (17) gehalten ist und diese an den Wangen (6) befestigbar sind.

3. Transporteur nach Anspruch 1, **dadurch gekennzeichnet, dass** die Achse (14) mit ihren Enden mittelbar oder unmittelbar an den Wangen (6) befestigbar ist.

4. Transporteur nach Anspruch 3, **dadurch gekennzeichnet, dass** die Achse (14) an ihren Enden mit jeweils einer Halteplatte (18) verbunden ist und diese an den Wangen (6) befestigbar sind.

5. Transporteur nach wenigstens einem der Ansprüche 2 bis 4, **dadurch gekennzeichnet, dass** die Flanschlager (17) und/oder die Halteplatten (18) wenigstens jeweils zwei beabstandete Bohrungen aufweisen, die mit zugeordneten Bohrungen (1,1' bis 5,5') an den Wangen (6) in Deckungslage bringbar und an diesen befestigbar sind.

6. Transporteur nach wenigstens einem der Ansprüche 1 bis 5, **dadurch gekennzeichnet, dass** für jede Position der Antriebswelle (12) und/oder Achse (14) jeweils ein Bohrungspaar (1,1' bis 5,5') in den Wangen (6) vorhanden ist.

7. Transporteur nach wenigstens einem der Ansprüche 2 bis 6 , **dadurch gekennzeichnet, dass** die Flanschlager (14) und/oder die Halteplatten (18) an den voneinander wegweisenden Seiten der Wangen (6) befestigbar sind.

## Claims

1. Conveyor for packages, with a support frame which has oppositely disposed sides (6) and on which is guided an endless flat topped chain (10) having an upper run and a lower run, a drive shaft (12) that is arranged at the front end of the support frame transversely with respect to the conveying direction (F) and that has a chain drive wheel (13) secured to it, and/or an axle (14) that is arranged at the rear end of the support frame transversely with respect to the conveying direction and that has a chain diverter wheel (15) rotatably carried by it, and also with openings (11, 11') in the sides (6), wherein the drive shaft (12) and/or the axle (14) can be fixed in different positions horizontally and vertically at the sides (6), and for each of the individual positions there are fixing holes (1, 1' to 5, 5') present in the sides (6), and the openings (11, 11') are so shaped that they can be extended through for each position of the drive shaft (12) or axle (14).

2. Conveyor according to claim 1, **characterised in that** the drive shaft (12) is supported at both ends in flanged bearings (17) and that these can be fixed to the sides (6).

3. Conveyor according to claim 1, **characterised in that** the axle (14) can be fixed at its ends to the sides (6) directly or indirectly.

4. Conveyor according to claim 3, **characterised in that** the axle (14) is connected at each end to a respective support plate (18) and that these can be fixed to the sides (6).

5. Conveyor according to at least one of claims 2 to 4, **characterised in that** the flanged bearings (17) and/or the support plates (18) have at least two respective spaced apart holes which can be brought into register with associated holes (1, 1' to 5, 5') at the sides (6) and fixed thereto.

6. Conveyor according to at least one of claims 1 to 5, **characterised in that** for each position of the drive shaft (12) and/or axle (14) a respective pair of holes (1, 1' to 5, 5') is present in the sides (6).

7. Conveyor according to at least one of claims 2 to 6, **characterised in that** the flanged bearings (14) and/or the support plates (18) can be fixed at the surfaces of the sides (6) that point away from each other.

## Revendications

1. Transporteur d'emballages dans lequel :
- un châssis porteur comporte des joues (6) disposées face-à-face et sur ce châssis peut se déplacer en étant guidée, une chaîne plate sans fin articulée par des charnières (10), comportant un bras supérieur et un bras inférieur,
- à l'extrémité avant du châssis porteur, se trouve un arbre d'entraînement (12) orienté perpendiculairement à la direction d'avancement (F) et sur lequel est fixée une roue d'entraînement de la chaîne (13),
- à l'extrémité arrière du châssis porteur, se trouve un axe (14) orienté perpendiculairement à la direction d'avancement et sur lequel est montée en rotation, une roue de renvoi de chaîne (15), ainsi que :
- des ouvertures (11, 11') sont percées dans les joues (6), et sur ces joues (6) l'arbre d'entraînement (12) et/ou l'axe (14) peut être fixé dans des positions différant les unes des autres horizontalement ou verticalement, et
- des perçages de fixation (1, 1' à 5, 5') sont prévus dans les joues (6) pour chacune des différentes positions et les ouvertures (11, 11') sont configurées de manière que l'arbre d'entraînement (12) ou l'axe (14), dans chacune de leurs positions, passent à travers les ouvertures (11, 11').

2. Transporteur d'emballages selon la revendication 1,
**caractérisé en ce que**
l'arbre d'entraînement (12) est monté à ses deux extrémités dans des paliers à bride (17) qui peuvent être fixés aux joues.

3. Transporteur d'emballages selon la revendication 1.
**caractérisé en ce que**
l'axe (14) peut être fixé par ses extrémités, directement ou indirectement aux joues (6).

4. Transporteur d'emballages selon la revendication 3,
**caractérisé en ce que**
l'axe (14), à chacune de ses extrémités, est relié à une plaque porteuse (18) qui peut être fixée à une joue (6).

5. Transporteur d'emballages selon au moins une des revendications 2 à 4,
**caractérisé en ce que**
les paliers à bride (17) et/ou les plaques porteuses (18) présentent chacun au moins deux perçages espacés qui peuvent être amenés en recouvrement avec les perçages associés (1, 1' à 5, 5') des joues (6) pour fixation sur ces joues.

6. Transporteur d'emballages selon au moins une des revendications 1 à 5,
**caractérisé en ce que**
pour chaque position de l'arbre d'entraînement (12) et/ou de l'axe (14), il est prévu une paire de perçages (1, 1' à 5, 5") dans les joues (6).

7. Transporteur d'emballages selon au moins une des revendications 2 à 6,
**caractérisé en ce que**
les paliers à bride (14) et/ou les plaques porteuses (18) peuvent être fixés sur les faces, se tournant le dos, des joues (6).
